# EUROPEAN PATENT SPECIFICATION

(11) **EP 0 547 848 B1**
(45) Date of publication and mention of the grant of the patent: **06.09.1995**
(21) Application number: 92311355.9
(22) Date of filing: 11.12.1992
(51) Int. Cl.: B60C 29/06

(54) **Improved inflation device for a pneumatic tyre**
Verbesserte Einrichtung zum Reifendruckfüllen
Dispositif amélioré de gonflage d'un pneumatique

(30) Priority: 14.12.1991 GB 9126584
(43) Date of publication of application: 23.06.1993
(73) Proprietor: SUMITOMO RUBBER INDUSTRIES LIMITED, Chuo-ku Kobe-shi Hyogo 651 (JP)
(72) Inventor: Stephens, Paul, Halesowen, West Midland B63 4DJ (GB)
(74) Representative: Stewart, Charles Geoffrey

(56) References cited:
- EP-A- 0 407 126
- CH-A- 280 372
- FR-A- 2 271 948
- GB-A- 286 363

## Description

This invention relates to an inflation device for introducing an inflating gas into an assembly of a pneumatic tyre on a wheelrim.

Modern pneumatic tyres for vehicles are of two types. This first of these is the so-called tubeless tyre which has an inner lining of rubber having a low permeability to air and which is designed to be mounted directly on to the vehicle wheelrim and inflated by means of an inflation device inserted in the wheel rim. The second type is the so-called tube type tyre which is designed to be inflated by means of a separate tube positioned inside the tyre on the wheelrim having an integral inflation device which projects through the wheelrim.

An inflation device according to the preamble of claim 1 is known from FR-A-2 271 948.

However regardless of the type of tyre it is important that the ply material of the tyre carcass, which is responsible for giving the tyre its strength, is protected from moisture which in the case of steel ply cords will cause rusting and with other ply materials cause a general deterioration of properties. Whilst from the outside the carcass ply may be well protected by the thickness of rubber in the tread and the sidewalls, on the inside of the tyre the carcass is not so well protected especially from moisture which is present in the air which inflates the tyre.

It is therefore an object of the present invention to provide a method of removing the moisture from the gas which inflates the tyre.

According to one aspect of the invention an inflation device for introducing an inflating gas through a wheelrim into a tyre/wheelrim assembly comprises a tubular passage containing a desiccant such that the gas passes through the desiccant and is dried.

Preferably the inflation device also comprises a one-way valve and more preferably the desiccant is provided downstream of the valve.

The inflation device may be used with either a tubeless or tube type tyre and the desiccant may be silica gel or anhydrous calcium chloride.

Further aspects of the invention will become apparent from the following description of some embodiments in conjunction with the following diagrams in which:-
Figure 1 shows in cross-section a conventional inflation device for a commercial vehicle; and
Figure 2 shows in cross-section an inflation device for a tubeless tyre according to the present invention.

The conventional inflation device 1 has a main body 2 having a stem port 12 which passes through a wheelrim 5 and is held in place by a clamp nut 3. A rubber grommet 4 provides a seal between the inflation device 1 and the wheel rim 5. The main body 2 has in the stem part 12 a chamber 6 which houses a standard one-way valve core (not shown) which allows an inflating gas to pass to the interior of the tyre/wheelrim assembly in the direction shown by the arrow.

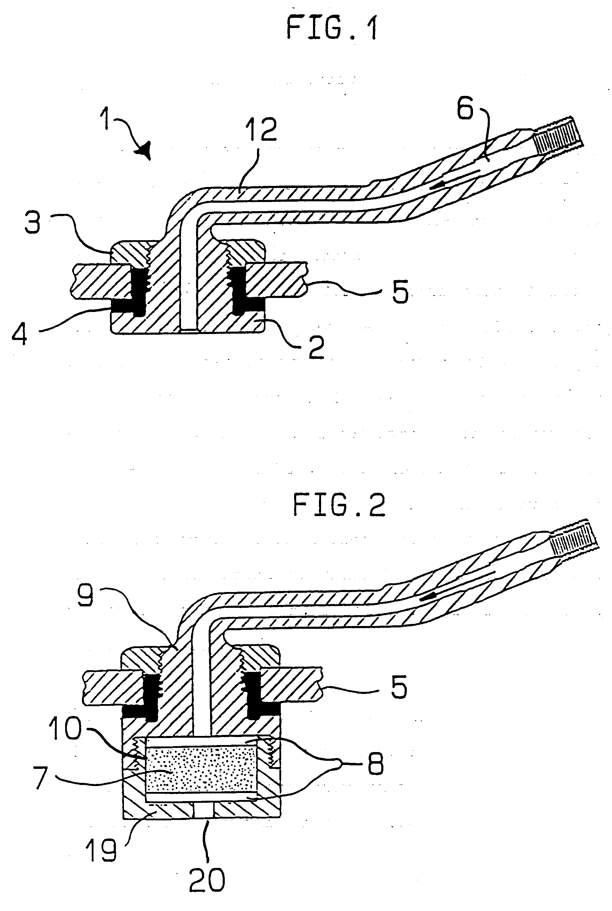

Figure 2 shows an inflation device according to the present invention which has attached to the main body 9 on the interior of the assembly a part 19 which forms a tubular passage or cavity 10 holding a porous desiccant material 7. This part 19 has a hole 20 to allow the passage of an inflation gas through the cavity to the interior of the tyre. The desiccant material is held in position by elements 8 which are also porous to allow the passage of the inflating gas. These elements 8 may comprise one or more layers of a mesh of suitable grid size or a plate having holes of a suitable size. The desiccant material 7 may be any suitable material but is preferably silica gel or anhydrous calcium chloride.

The open cavity for holding the desiccant may alternatively be formed elsewhere in the inflation device such as in the stem part of the main body and either upstream or downstream of the one-way valve.

The inflation device may have engagement and sealing means such as a clamp nut and a rubber grommet, or a rubber housing, so that it may be used with a tubeless tyre and wheelrim assembly. Alternatively the inflation device may be integral with a tyre tube for use with a tube type tyre and wheelrim assembly.

## Claims

1. An inflation device for introducing an inflating gas through a wheel rim into a tyre/wheelrim assembly characterised by a tubular passage (10) containing a desiccant (7) such that the gas passes through the desiccant (7) and is dried.

2. An inflation device according to claim 1 characterised in that the device comprises a one-way valve.

3. An inflation device according to claim 2 characterised in that the desiccant (7) is provided downstream of the valve.

4. An inflation device according to claim 2 or claim 3 characterised in that the tubular passage (10) is provided with porous retaining means (8) to hold the desiccant (7) in position.

5. An inflation device according to any of claims 1 to 4 characterised in that the desiccant (7) is silica gel.

6. An inflation device according to any of claims 1 to 4 characterised in that the desiccant (7) is anhydrous calcium chloride.

7. An inflation device according to any of claims 1 to 6 characterised in that the inflating device has wheelrim engaging and sealing means so that it may be used with a tubeless tyre and wheelrim assembly.

8. An inflation device according to any of claims 1 to 6 characterised in that the inflating device is integral with a tube so that it is suitable for a tube type tyre.

## Patentansprüche

1. Eine Aufpumpvorrichtung zum Einfüllen eines Aufpumpgases durch eine Radfelge in eine Reifen/Radfelgen-Anordnung,
gekennzeichnet durch
einen rohrförmigen Kanal (10), der ein Trocknungsmittel (7) enthält, so daß das Gas durch das Trocknungsmittel (7) tritt und getrocknet wird.

2. Eine Aufpumpvorrichtung nach Anspruch 1,
dadurch gekennzeichnet,
daß die Vorrichtung ein Einwegventil umfaßt.

3. Eine Aufpumpvorrichtung nach Anspruch 2,
dadurch gekennzeichnet,
daß das Trocknungsmittel (7) stromabwärts von dem Ventil vorgesehen ist.

4. Eine Aufpumpvorrichtung nach Anspruch 2 oder Anspruch 3,
dadurch gekennzeichnet,
daß der rohrförmige Kanal (10) mit einem porösen Haltemittel (8) versehen, um das Trocknungsmittel (7) in Position zu halten.

5. Eine Aufpumpvorrichtung nach einem der Ansprüche 1 bis 4
dadurch gekennzeichnet,
daß das Trocknungsmittel (7) ein Silikagel ist.

6. Eine Aufpumpvorrichtung nach einem der Ansprüche 1 bis 4,
dadurch gekennzeichnet,
daß das Trocknungsmittel (7) wasserfreies Kalziumflorid ist.

7. Eine Aufpumpvorrichtung nach einem der Ansprüche 1 bis 6,
dadurch gekennzeichnet,
daß die Aufpumpvorrichtung ein Radfelgeneingriffs- und Dichtungsmittel aufweist, so daß sie mit einer schlauchlosen Reifen- und Radfelgenanordnung verwendet werden kann.

8. Eine Aufpumpvorrichtung nach einem der Ansprüche 1 bis 6,
dadurch gekennzeichnet,
daß die Aufpumpvorrichtung integral mit einem Schlauch ausgebildet ist, so daß sie für einen Schlauchreifen geeignet ist.

## Revendications

1. Dispositif de gonflage destiné à l'introduction d'un gaz de gonflage dans une jante de roue d'un ensemble formé d'un pneumatique et d'une jante de roue, caractérisé par un passage tubulaire (10) contenant une matière déshydratante (7) de manière que le gaz traverse la matière déshydratante (7) et soit séché.

2. Dispositif de gonflage selon la revendication 1, caractérisé en ce qu'il comprend une valve unidirectionnelle.

3. Dispositif de gonflage selon la revendication 2, caractérisé en ce que la matière déshydratante (7) est disposée en aval de la valve.

4. Dispositif de gonflage selon la revendication 2 ou 3, caractérisé en ce que le passage tubulaire (10) contient un dispositif poreux de retenue (8) destiné à maintenir la matière déshydratante (7) en position.

5. Dispositif de gonflage selon l'une quelconque des revendications 1 à 4, caractérisé en ce que la matière déshydratante (7) est un gel de silice.

6. Dispositif de gonflage selon l'une quelconque des revendications 1 à 4, caractérisé en ce que la matière déshydratante (7) est du chlorure de calcium anhydre.

7. Dispositif de gonflage selon l'une quelconque des revendications 1 à 6, caractérisé en ce que le dispositif de gonflage comporte un dispositif de coopération et d'étanchéité avec la jante de roue de manière qu'il puisse être utilisé avec un ensemble à pneumatique sans chambre et jante de roue.

8. Dispositif de gonflage selon l'une quelconque des revendications 1 à 6, caractérisé en ce que le dispositif de gonflage est solidaire d'une chambre afin qu'il puisse être utilisé avec un pneumatique du type à chambre.
